# EUROPEAN PATENT APPLICATION

(11) **EP 2 530 549 A2**
(43) Date of publication of application: **05.12.2012**
(21) Application number: 12170096.7
(22) Date of filing: 30.05.2012
(51) Int. Cl.: G05B 19/418

(54) **Systems and methods for alert capture and transmission**

(30) Priority: 31.05.2011 US 201113149660
(71) Applicant: General Electric Company, Schenectady, NY 12345 (US)
(72) Inventor: Karaffa, John Michael, Salem, VA 24153-6422 (US); Downor, Johnny Stephen, Salem, VA 24153-6422 (US); Smith, Stephen William, Salem, VA 24153-6422 (US); Petti, William Robert, Salem, VA 24153-6422 (US)
(74) Representative: Picker, Madeline Margaret

(57) **Abstract**

The embodiments described herein include a system and a method. In one embodiment, an industrial process control system (10) includes a controller (26, 27) coupled to a field device (38, 40, 42, 44). The industrial process control system (10) further includes an alert server (70) coupled to the controller (26, 27). The controller (26, 27) is configured to receive alert information from the field device (38, 40, 42, 44) in a first protocol and communicate the alert information to the alert server (70) in a second protocol.

## Description

### BACKGROUND OF THE INVENTION

The subject matter disclosed herein relates to the capture and transmission of information, and more specifically, to the capture and transmission of alert information.

Certain systems, such as industrial control systems, may provide for control capabilities that enable the execution of computer instructions in various types of devices, such as sensors, pumps, valves, and the like. For example, a communications bus may be used to send and receive signals to the various devices. Each device may issue alerts related to the device conditions and control logic. However, various types of devices from different manufacturers may communicate over the communications bus. Accordingly, configuring alerts and transmission of the alerts related to these multiple devices may be complex and time consuming.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, an industrial process control system includes a controller coupled to a field device. The industrial process control system further includes an alert server coupled to the controller. The controller is configured to receive alert information from the field device in a first protocol and communicate the alert information to the alert server in a second protocol.

In a second embodiment, a method includes collecting, via a controller of an industrial control system, alerts from a field device in a first protocol. The method further includes transitioning, via the controller of the industrial control system, the alerts to an alert server in a second protocol. The method also includes providing the alerts to a plurality of components of the industrial control system. The first protocol is different from the second protocol.

In a third embodiment, a non-transitory tangible computer-readable medium including executable code is provided. The executable code includes instructions for collecting, via a controller of an industrial control system, alerts from a field device in a first protocol. The executable code further includes instructions for transferring, via the controller of the industrial control system, the alerts to an alert server in a second protocol. The executable code also includes instructions for providing the alerts to a plurality of components of the industrial control system, wherein the first protocol is different from the second protocol.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of an industrial control system, including a communications bus;
FIG. 2 is a block diagram including embodiments of various components of the industrial control system of FIG. 1;
FIG. 3 is a flow chart of an embodiment of a process useful in collecting and transferring alert information;
FIG. 4 is a information flow diagram of an embodiment of a Fieldbus process and an alarm process; and
FIG. 5 is a flow chart of an embodiment of a process suitable for collecting alert information from a device newly introduced to the industrial control system of FIG. 1.

### DETAILED DESCRIPTION OF EMBODIMENTS OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

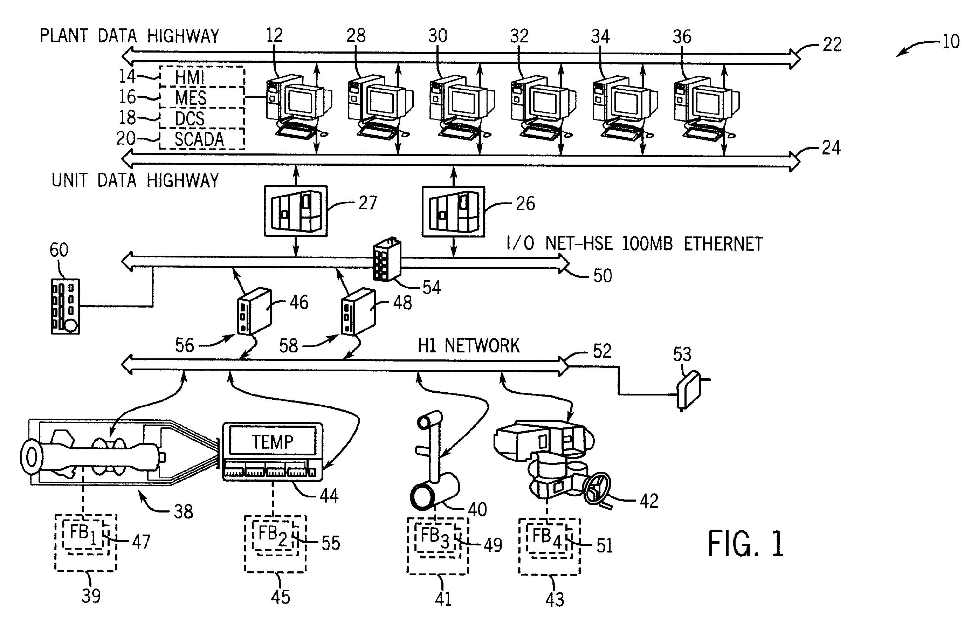

Industrial control systems may include controller systems suitable for interfacing with a variety of field devices, such as sensors, pumps, valves, and the like. For example, sensors may provide inputs to the controller system, and the controller system may then derive certain actions in response to the inputs, such as actuating the valves, driving the pumps, and so on. In certain controller systems, such as the Mark™ VIe controller system, available from General Electric Co., of Schenectady, New York, multiple field devices may be communicatively coupled to and controlled by a controller. Indeed, multiple controllers may be controlling multiple field devices, as described in more detail with respect to FIG. 1 below. The devices communicatively connected to the controller may include field devices, such as Fieldbus Foundation devices, that include support for the Foundation H1 bi-directional communications protocol. Accordingly, the devices may be communicatively connected with the controller in various communication segments, such as H1 segments, attached to linking devices, to enable a plant-wide network of devices.

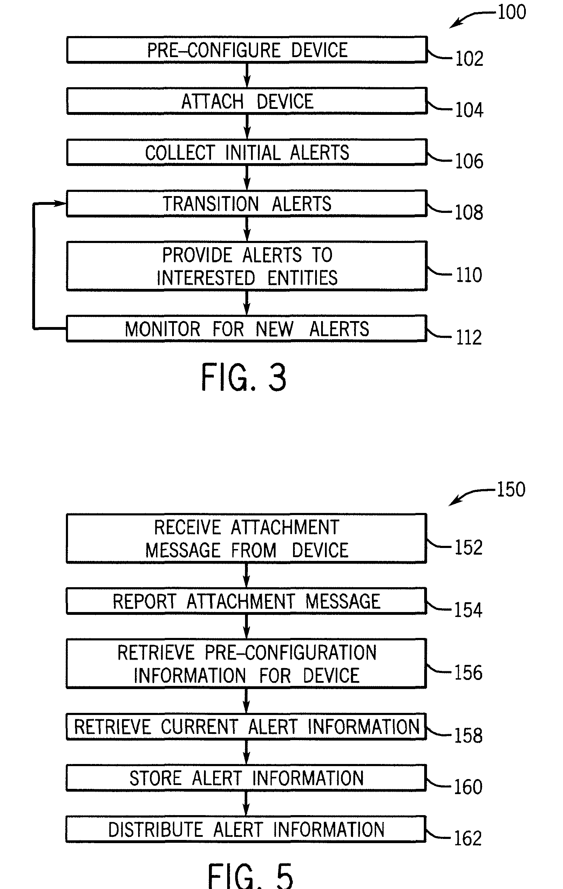

Each field device may include computer instructions or control logic encapsulated in function blocks. For example, a proportional-integral-derivative (PID) function block may include PID instructions suitable for implementing a closed-loop control of certain processes, such as industrial processes. Likewise, an Analog Input (AI) function block and an Analog Output (AO) function block may be used to retrieve input data and to submit output data, respectively. Indeed, various types of function blocks may be provided that can include a variety of computer instructions or control logic, as described in more detail below with respect to FIG. 1. The field device may then execute the computer instructions or control logic in the function block. Different types of alerts, such as alarms and events, may be included in each function block, as described in more detail below with respect to FIG. 3. Thus, the field devices may issue a variety of alarms and events related to execution of the function blocks as well as to diagnostic conditions of the field devices. As referred to herein, the term "alerts" includes both alarms and events. Generally, as used herein, an "alarm" refers to a condition that may include acknowledgment by a human operator, while an "event" refers to a condition that may include automatic acknowledgment.

In one embodiment, the field devices and the function blocks associated with each field device may be pre-configured before physically attaching the field devices to the industrial automation system. For example, a user, such as a control engineer or commissioning engineer, may select certain function blocks to use in a control loop (e.g., instantiate the function blocks) and pre-configure the field device by programming a control loop with the selected function blocks. When the pre-configured field device is then connected into the industrial automation system, the field device may be automatically integrated into the existing process and corresponding control loop. However, integrating alert information into existing controllers may be more difficult. For example, a controller may be manufactured by one entity, while the field devices may each be manufactured by different entities.

As described below, the systems and methods disclosed herein enable the automatic incorporation and distribution of alert information for field devices after the field devices are physically attached to the industrial automation system. Such a "plug and play" approach enables alert information to be gathered from the field devices and provided to the controller. Moreover, this "plug and play" approach enables clients to be alerted once the field device is physically attached to the industrial automation system. Further, this "plug and play" approach may minimize or eliminate human involvement during the incorporation and distribution of the alert devices. In some embodiments, the alert clients may include clients communicating in a protocol different than the protocol used by the field devices. For example, the field devices may use a Fieldbus Foundation communications protocol, while the alert clients may use a serial data interface (SDI) communications protocol. Indeed, the systems and methods disclosed herein enable harvesting of alert information from field devices that may be suitable for use in a variety of alert clients, including alert clients communicating in a variety of protocols. In this manner, alert information for a variety of field devices may be easily provided and displayed for review by the user. Once the field devices are connected, the systems and methods described herein may automatically upload the pre-configuration information into the field devices, allowing the industrial automation system to begin to receive alert information from the field devices.

Turning to FIG. 1, an embodiment of an industrial process control system 10 is depicted. The control system 10 may include a computer 12 suitable for executing a variety of field device configuration and monitoring applications, and for providing an operator interface through which an engineer or technician may monitor the components of the control system 10. The computer 12 may be any type of computing device suitable for running software applications, such as a laptop, a workstation, a tablet computer, or a handheld portable device (e.g., personal digital assistant or cell phone). Indeed, the computer 12 may include any of a variety of hardware and/or operating system platforms. In accordance with one embodiment, the computer 12 may host an industrial control software, such as a human-machine interface (HMI) software 14, a manufacturing execution system (MES) 16, a distributed control system (DCS) 18, and/or a supervisor control and data acquisition (SCADA) system 20. For example, the computer 12 may host the ControlST™ software, available from General Electric Co., of Schenectday, New York.

Further, the computer 12 is communicatively connected to a plant data highway 22 suitable for enabling communication between the depicted computer 12 and other computers 12 in the plant. Indeed, the industrial control system 10 may include multiple computers 12 interconnected through the plant data highway 22. The computer 12 may be further communicatively connected to a unit data highway 24, suitable for communicatively coupling the computer 12 to industrial controllers 26 and 27. The system 10 may include other computers coupled to the plant data highway 22 and/or the unit data highway 24. For example, embodiments of the system 10 may include a computer 28 that executes a virtual controller, a computer 30 that hosts an Ethernet Global Data (EGD) configuration server, an Object Linking and Embedding for Process Control (OPC) Data Access (DA) server, an alarm server, or a combination thereof, a computer 32 hosting a General Electric Device System Standard Message (GSM) server, a computer 34 hosting an OPC Alarm and Events (AE) server, and a computer 36 hosting an alarm viewer. Other computers coupled to the plant data highway 22 and/or the unit data highway 24 may include computers hosting Cimplicity™, ControlST™, and ToolboxST™, available from General Electric Co., of Schenectady, New York.

The system 10 may include any number and suitable configuration of industrial controllers 26 and 27. For example, in some embodiments the system 10 may include one industrial controller 26, or two (e.g., 26 and 27), three, or more industrial controllers for redundancy. The industrial controllers 26 and 27 may enable control logic useful in automating a variety of plant equipment, such as a turbine system 38, a valve 40, and a pump 42. Indeed, the industrial controller 26 and 27 may communicate with a variety of devices, including but not limited to temperature sensors 44, flow meters, pH sensors, temperature sensors, vibration sensors, clearance sensors (e.g., measuring distances between a rotating component and a stationary component), and pressure sensors. The industrial controller may further communicate with electric actuators, switches (e.g., Hall switches, solenoid switches, relay switches, limit switches), and so forth.

Each field device 38, 40, 42, and 44 may include a respective device description (DD) file, such as the depicted DD files 39, 41, 43, and 45. The DD files 39, 41, 43, and 45 may be written in a device description language (DDL), such as, the DDL defmed in the International Electrotechnical Commission (IEC) 61804 standard. In some embodiments, the files 39, 41, 43, and 45 are tokenized binary files. That is, the DD files 39, 41, 43, and 45 may include data formatted in a tokenized binary format useful in reducing the size of the DD files 39, 41, 43, and 45. The DD files 39, 41, 43, and 45 may each include one or more function blocks 47, 49, 51, and 55. The function blocks 47, 49, 51, and 55 may include computer instructions or computer logic executable by processors. In this way, the field devices 38, 40, 42, and 44 may contribute control logic and other computer instructions towards the execution of processes in the industrial process control system 10.

In the depicted embodiment, the turbine system 38, the valve 40, the pump 42, and the temperature sensor 44 are communicatively interlinked to the automation controller 26 and 27 by using linking devices 46 and 48 suitable for interfacing between an I/O NET 50 and a H1 network 52. For example, the linking devices 46 and 48 may include the FG-100 linking device, available from Softing AG, of Haar, Germany. In some embodiments, a linking device, such as the linking device 48, may be coupled to the I/O NET through a switch 54. In such an embodiment, other components coupled to the I/O NET 50, such as one of the industrial controllers 26, may also be coupled to the switch 54. Accordingly, data transmitted and received through the I/O NET 50, such as a 100 Megabit (MB) high speed Ethernet (HSE) network, may in turn be transmitted and received by the H1 network 52, such as a 31.25 kilobit/sec network. That is, the linking devices 46 and 48 may act as bridges between the I/O Net 50 and the H1 network 52. Accordingly, a variety of devices may be linked to the industrial controller 26, 27 and to the computer 12. For example, the devices, such as the turbine system 38, the valve 40, the pump 42, and the temperature sensor 44, may include industrial devices, such as Fieldbus Foundation devices that include support for the Foundation H1 bi-directional communications protocol. In such an embodiment, a Fieldbus Foundation power supply 53, such as a Phoenix Contact Fieldbus Power Supply available from Phoenix Contact of Middletown, PA, may also be coupled to the H1 network 52 and may be coupled to a power source, such as AC or DC power. The power supply 53 may be suitable for providing power to the devices 38, 40, 42, and 44, as well as for enabling communications between the devices 38, 40, 42, and 44. Advantageously, the H1 network 52 may carry both power and communications signals (e.g., alert signals) over the same wiring, with minimal communicative interference. The devices 38, 40, 42, and 44 may also include support for other communication protocols, such as those included in the HART® Communications Foundation (HCF) protocol, and the Profibus Nutzer Organization e.V. (PNO) protocol.

Each of the linking devices 46 and 48 may include one or more segment ports 56 and 58 useful in segmenting the H1 network 52. For example, the linking device 46 may use the segment port 56 to communicatively couple with the devices 38 and 44, while the linking device 48 may use the segment port 58 to communicatively couple with the devices 40 and 42. Distributing the input/output between the devices 38, 44, 40, and 42 by using, for example, the segment ports 56 and 58, may enable a physical separation useful in maintaining fault tolerance, redundancy, and improving communications time. In some embodiments, additional devices may be coupled to the I/O NET 50. For example, in one embodiment an I/O pack 60 may be coupled to the I/O NET 50. The I/O pack 60 may provide for the attachment of additional sensors and actuators to the system 10.

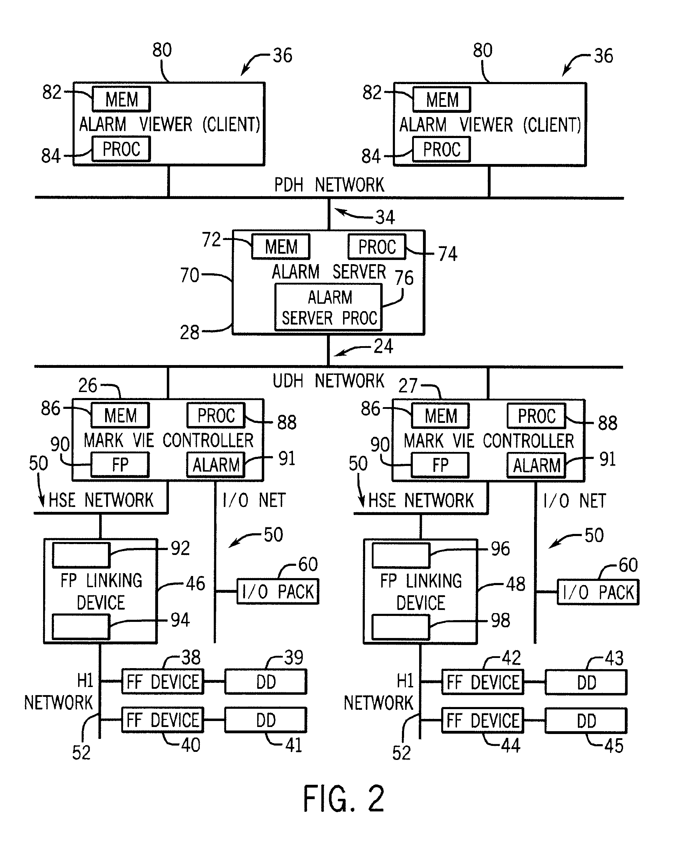

In certain embodiments, the devices 38, 40, 42, and 44 may provide data, such as alerts, to the system 10. These alerts may be handled in accordance with the embodiments described below. FIG. 2 depicts a block diagram of an embodiment of the industrial process control system 10 depicting various components in further detail. As described above, the system 10 may include an alarm server 70, executed on the computer 28, coupled to the plant data highway 22 and the unit data highway 24. The computer 28 may include a memory 72, such as non-volatile memory and volatile memory, and a processor 74, to facilitate execution of the alarm server 70. The alarm server 70 may execute an alarm server process 76 for receiving, processing, and responding to alarms received from the controllers 26 and 27. Multiple controllers, such as the controllers 26 and 27 may be set up for redundant operations. That is, should the controller 26 become inoperative, the controller 27 may take over and continue operations.

The system 10 may include additional computers 36 coupled to the plant data highway 34 that may execute alarm viewers 80. The alarm viewers 80 may enable a user to view and interact with the alarms processed by the alarm server 70. The computers 36 may each include a memory 82 and a processor 84 for executing the alarm viewer 80. Additionally, in some embodiments, the alarm viewers 80 may be executed on the computer 28 or any of the computers described above in FIG. 1. The alarm server 70 may communicate with the alarm viewers 80 using any suitable alarm data protocol interpretable by the alarm viewers 80.

As described above, the controllers 26 and 27 are coupled to the unit data highway 24, and the controllers 26 and 27 may communicate with the alarm server 70 over the unit data highway 24. For example, in one embodiment, the controllers 26 and alarm server 70 may communicate using the SDI alarm protocol. The controllers 26 and 27 may each include a memory 86 and a processor 88 for executing the functions of the controllers 26 and 27. In one embodiment, the controllers 26 and/or 27 may execute a Fieldbus process 90 and an alarm process 91. The Fieldbus process 90 may be used to interface with the field devices 38, 40, 42, and 44 while the alarm process 91 may be used to provide for a centralized facility suitable for distributing alarm information, as described in more detail with respect to FIG. 3. Alert and function block information may be included in the DD files 39, 41, 43, and 45 corresponding to each filed device 38, 40, 42, and 44, respectively. As mentioned above, the controllers 26 and 27 may be coupled to the I/O pack 60 over the I/O NET 50. In one embodiment, the I/O pack 60 may communicate with the controllers 26 and 27 using the advanced digital logic (ADL) protocol.

As also described above, the controllers 26 and 27 may be coupled to linking devices 46 and 48 through an I/O NET 50. The linking devices 46 and 48 may communicate with the controllers 26 and 27 over the I/O NET 50. The linking devices 46 and 48 may also be coupled to the H1 network 52, and one linking device 46 may be coupled to devices 38 and 44 and another linking device 48 may be coupled to devices 40 and 42. The linking device 46 may include a memory 92, such as volatile and non-volatile memory, and the processor 94, and the linking device 48 may include a memory 96, such as volatile and non-volatile memory, and a processor 98. In one embodiment, the linking devices 46 and 48 may communicate with the controllers 26 and 27 using the Fieldbus Foundation protocol.

The industrial automation system 10 may enable alarm and diagnostic information to be communicated from the various devices to a user, such as through the HMI 14 and the alarm viewers 80, as described in more detail below with respect to FIG. 3. For example, alarm and diagnostic information in a first format (e.g., Fieldbus Foundation protocol), may be received by the controller 26 and forwarded to the alarm server 70 in a second format (e.g., SDI protocol). By translating the alert information as necessary and by providing a common distribution service for alert information, the controller 26 may enable the efficient use of a variety of devices communicating in different protocols. Additionally, the controller 27 may provide for redundant operations, thus maintaining alert information in the event of downtime by the controller 26.

FIG. 3 is a flow chart depicting an embodiment of a process 100 useful in capturing alert information and continuously providing the information to the alarm server 70 and the alarm viewers 80, as well as the redundant controllers 26 and 27 shown in FIG. 2. It is to be understood, that, in other embodiments, the controller 27 may be programmed for distributed operations rather than redundant operations. That is, each controller 26 and 27 may control different devices, and should the controller 26 become inoperable, the controller 27 may not take over operations of the controller 26. The process 100 may be implemented as executable code instructions stored on a non-transitory tangible computer-readable medium, such as the volatile or non-volatile memories 86 of the controllers 26 and 27. A field device, such as any of the field devices 38, 40, 42, and 44 shown in FIGS. 1 and 2, may first be pre-configured (block 102) with function block and alert information. For example, the HMI 14, MES 16, DCS 18, and SCADA 20 may be used to provide one or more screens suitable for pre-configuring the field device 38 to provide for a desired control logic and alert information behavior. In one embodiment, the DD file 39 corresponding to the field device 38 may be used retrieve device configuration information, including alert information. For example, the DD file 39 may include information such as function blocks associated with the field device 38, alerts corresponding to each function block, and alerts corresponding to the devices (e.g., diagnostic alarms).

A device placeholder (e.g., virtual device) may then be presented by the pre-configuration screen and selected by a user (e.g., control engineer, commissioning engineer) to enter configuration information related to the device. The configuration information read from the DD file 39 may include alert information that may include undefined alerts, low limit alarms (LO), high limit alarms (HI), critical low limit alarms (LO LO), critical high limit alarms (HI HI), deviation low alarms (DV LO), deviation high alarms (DV HI), discrete alarms (DISC), block alarms (BLOCK), write protect changed alarm (WRITE), static data update event, link associated with function block update event, trend associated with block update event, ignore bit string update event (IGNORE), integrator reset update event (RESET), or any other suitable alert parameters or other information. The user may pre-configure the alerts, for example, by assigning alert limit values, acknowledgement options (e.g., automatic acknowledgement of the alert, manual acknowledgement of the alert), alarm hysteresis (i.e., amount a process value must return within the alarm limit before an alarm condition clears), alert key (i.e., value used in sorting alerts), alert priority, and the like. The user may also pre-configure the function blocks and program a control loop with the function blocks associated with the device.

The device 38 may then be attached to the industrial automation system 10 (block 104), such as, by attaching the device to the H1 network 52. In one embodiment, the coupling of the device to the H1 network 52 may then result in an automatic commissioning of the device. That is, the configuration data entered during pre-configuration (block 102) of the device 38 may be automatically loaded into a memory of the device 38. Indeed, a "plug and play" process may automatically update the device 38 with any pre-configuration information detailed in the device placeholder (e.g., virtual device). In another embodiment, the device 38 may be attached to the H1 network 52 and the device may then be manually commissioned, using, for example, a commissioning tag. The commissioning tag may include information such as device ID, model type, serial number, and the like. Once attached and commissioned (block 104), the device 38 may now be communicatively connected to all other components of the industrial control system 10.

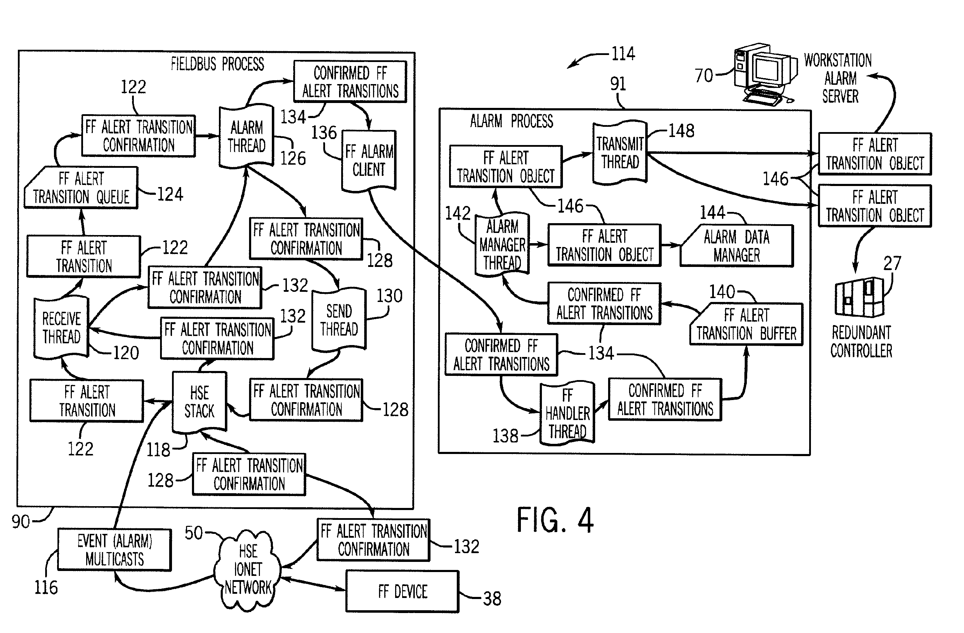

In the depicted embodiment, the process 100 may perform an initial alert collection (block 106) to retrieve alert data from the field device 38 when the device 38 is first attached to the H1 network 52 and commissioned. For example, the controller's Fieldbus process 90 may interact with the field device 38 via the linking device 46 to request alert data, as described in more detail below with respect to FIG. 5. The initial alert collection (block 106) may include retrieving all current alarms and events associated with the field device 38. For example, diagnostic alerts, such as alerts requesting re-calibration of the field device 38, may be provided to the controller 26 shown in FIGS. 1 and 2. The alerts may then be transitioned (i.e., provided) to the alarm server 70 (block 108) in a protocol understandable by the alarm server, as described in more detail below with respect to FIG. 4, and then further provided to interested parties (block 110), such as the alarm viewers 80 and redundant controllers 26. The transitioning may include translating alarm information in one protocol (e.g., Foundation protocol), into alarm information in a different protocol (e.g., SDI protocol).

The process 100 may then monitor the field and linking device for new alerts (block 112). In one embodiment, monitoring for new alerts (block 112) may include listening for multicast broadcasts issued by the field devices, e.g., devices 38, 40, 42, and 44, and linking devices, e.g., the linking devices 46 and 48. All alerts related to the multicast broadcasts may then be subsequently transitioned to the alarm server 70 (block 108) for subsequent processing and delivery to the interested entities (block 110). By transitioning the alerts into a common protocol understandable by the alarm server 70, the systems and methods described herein enable a variety of devices to participate in sending and receiving alert information. In this manner, a more efficient and resilient alerting system is provided.

FIG. 4 is an information flow diagram 114 illustrating an embodiment of information flows between the Fieldbus process 90 and the alarm process 91 depicted in FIG. 2. The Fieldbus process 90 and its various components may be implemented as executable code instructions stored on a non-transitory tangible machine-readable medium, e.g., the volatile and non-volatile memory 86 of the controller 26. Likewise, the alarm process 91 and its various components may be implemented as executable code instructions stored on a non-transitory tangible machine-readable medium, e.g., the volatile and non-volatile memory 86 of the controller 26. The depicted information flow may be suitable for transitioning alerts from the field devices 38, 40, 42, and 44 to the alarm server 70 and redundant controller(s) 26. That is, alerts from the field devices, 38, 40, 42, and 44 may be received and processed by the processes 90 and 91, and then provided to any number of interested entities (e.g., alarm server 70 and redundant controller 27) in the entities' preferred protocol.

In the depicted embodiment, the Fieldbus process 90 and the alarm process 91 are used to transition alerts to the alarm server 70 and the redundant controller 26. Specifically, the Fieldbus process 90 may "listen" for alerts issuing out of field devices 38, 40, 42, and 44, acknowledge the alerts, and transition the alert information to the alarm process 91. The alarm process 91 may then communicate with the alarm server 70 in a suitable protocol (e.g., SDI) and transmit the Fieldbus alert information. By enabling the translation of alert information issued in one protocol (e.g., Fieldbus protocol) into the alarm server 70 in a second protocol (e.g., SDI), the systems and methods described herein provide for enhance alert compatibility and transmission of a variety of alert information.

In one embodiment, a field device, such as the field devices 38, may issue an event or alarm multicast broadcast 116 to notify the system 10 of an alert condition (i.e., an event, an alarm, or a combination thereof). As depicted, the Fieldbus process 90 may receive the multicast broadcast 116 issuing out of the I/O Net 50. For example, the field device 38 may issue the event or alarm multicast broadcast 116, which may then be transmitted though the I/O Net 50 by the linking device 48 shown in FIGS. 1 and 2. In one embodiment, the multicast broadcast 116 may be received by an HSE stack 118 monitoring I/O Net 50 HSE ports. A receive thread 120 executing in the Fieldbus process 90 may be constantly checking for multicast broadcasts 116 received by the HSE stack 118. Upon receipt of the multicast broadcasts 116 by the HSE stack 118, the receive thread 120 may package all alert information (e.g., alarms and events) related to the multicast broadcasts 116 into a Fieldbus Foundation (FF) alert transition 122, and then transfer the FF alert transition 122 into a FF alert transition queue 124. Additionally, the receive thread 120 may notify an alarm thread 126 of the receipt and transfer of the FF alert transition 122.

The FF alert transition may include the multicasted event or alarm broadcast 116, as well as all information related to the multicast broadcasts 116. For example, the FF alert transition 122 may include undefined alerts, low limit alarms (LO), high limit alarms (HI), critical low limit alarms (LO LO), critical high limit alarms (HI HI), deviation low alarms (DV LO), deviation high alarms (DV HI), discrete alarms (DISC), block alarms (BLOCK), write protect changed alarm (WRITE), static data update event, link associated with function block update event, trend associated with block update event, ignore bit string update event (IGNORE), and integrator reset update event (RESET), and any other related information, such as user pre-configuration information.

The alarm thread 126 may then retrieve the FF alert transition 122 from the queue 124 for further transmittal, such as for transmitting the FF alert transition 122 to the alarm process 91 and for confirmation of receipt of the multicast broadcast 116. For example, the alarm thread 126 may issue a FF alert transition confirmation 128 by using a send thread 130. The send thread 130 may dispose the FF alert transition confirmation 128 in the HSE stack 118, which may then be received by the field device 38 that issued the multicast broadcast 116. A confirmation 132 of receipt of the FF alert transition confirmation 128 may then be issued by the device 38. Indeed, receipt of the alert transition confirmation 128 by the alert issuing device 38 may be confirmed by issuing the confirmation 132. The confirmation 132 may be retrieved from the HSE stack 118 by the receive thread 120 and forwarded to the alarm thread 126. In this manner, the alarm thread 126 is appraised for the receipt of the initial FF alert transition confirmation 128 by the alert issuing device 38.

Next, as shown in FIG. 4, the alarm thread 126 may then transmit confirmed FF alert transitions 134 to the alarm process 91 by using a FF alarm client 136. For example, the FF alarm client 136 may communicate with a FF handler thread 138 included in the alarm process 91 to deliver the confirmed FF alert transitions 134. The FF handler thread 138 may then store the confirmed FF alert transitions 134 in a FF alert transition buffer 140. In this manner, multiple FF alert transitions 134 may be buffered for more efficient processing.

After storing the confirmed FF alert transitions 134 in the buffer 140, an alarm manager thread 142 may then retrieve the FF alert transition 134 from the buffer 140 for further data processing and storage. For example, the information included in the FF alert transition 134 may be stored in an alarm data manager 144 as a FF alert transition object 146. In certain embodiments, the alarm data manager 144 may be a multi-dimensional data warehouse or any other suitable data store (e.g., relational database, network database, binary file). The alarm data manager 144 may not only store FF alert transition objects 146 and related alarms and events, but may also store information issued through the I/O packs 60 shown in FIGS. 1 and 2. Indeed, the alarm data manager 144 may store and manage alerts associated with a variety of alert systems and protocols, including Fieldbus Foundation, SDI, Profibus, and HART systems and protocols.

Once the FF alert transition object 146 is stored in the alarm data manager 144, the alarm manager thread 142 may then transmit the FF alert transition object 146 to other entities of the system 10. For example, a transmit thread 148 may transmit the FF alert transition object 146 to the redundant controller 27. As mentioned above, some embodiments may include two or more controllers, such as the controllers 26 and 27, to provide fault tolerance and redundancy. In certain embodiments, the controllers 26 and 27 may be communicatively coupled in a client/server relationship, as depicted in FIG. 4. This client/server relationship advantageously enables a server controller 26 executing the alarm process 91 to manage and control alert information as a single "owner" of the information. The server controller 26 may then disseminate the alert information to a client controller, such as the depicted redundant controller 27. One of the client controllers 27 may then take over the server role should the server controller 26 become otherwise inoperative. By providing alert information to multiple controllers, redundant and fault tolerant alert operations are enabled.

Additionally, the transmit thread 148 may transmit the FF alert transition object 146 to the alarm server 70 for further alert processing and distribution. The alarm server 70 may use a different communication protocol, such as the SDI protocol. Accordingly, the transmit thread 148 may transfer the FF alert transition object 146 by using the protocol supported by the alarm server 70. A variety of protocols may be supported suitable for communication with various alarm servers 70. For example, the system 10 may use the transmission control protocol/internet protocol (TCP/IP), user datagram protocol (UDP), hypertext transfer protocol (HTTP), institute of electrical and electronics engineers (IEEE) 802.11 (e.g., IEEE 802.11 a/b/g/n), Zigbee, and Z-Wave. The alarm server 70 may then distribute alarms to the alarm viewers 80 depicted in FIG. 2. Advantageously, the information flow described with respect to FIG. 4 may also be used to transition alert information from a device that has recently been attached to the I/O Net 50, as depicted in FIG. 5.

FIG. 5 is a flow chart of a process 150 suitable for retrieving and distributing alert information from a field device that has been recently attached to the system 10 shown in FIG. 1. The process 150 may include code or computer instructions executable by a processor. As mentioned above, a field device, such as the device 38 shown in FIGS. 1-3, may be first pre-configured before physically attaching the device 38 to the system 10 through the I/O Net 50. Once the device 38 is attached to the I/O Net 50, the device 38 may then become commissioned. The commissioning may include allocating an address for use in communicating with the device 38, and may also include enabling the device 38 to participate in a macrocycle (e.g., execution cycle) used in executing function blocks. The HSE stack 118 may receive attachment messages (block 152) from the newly commissioned device 38 informing the system 10 that the device is now attached and ready to participate in process control operations. In one embodiment, the attachment messages may include messages in the Foundation protocol transmitted by the field device 38 in response to a probe node token sent by the linking device 46. That is, the attachment messages are messages used to communicate that the device 38 is now attached to the H1 network 52. Once the attachment messages are received, the FF process 90 may then inform the alarm process 91 (block 154) that the newly introduced device 38 is now ready to participate in alert operations. The alarm process 91 may then use a catalog or other suitable database to retrieve any pre-configuration information available for the device 38 (block 156). As mentioned above, the device may be pre-configured with any number of alert related information, such as alert limit values, acknowledgement options (e.g., automatic acknowledgement of the alert, manual acknowledgement of the alert), alarm hysteresis (i.e., amount a process value must return within the alarm limit before an alarm condition clears), alert key (i.e., value used in sorting alerts), alert priority, and the like.

This alert related information for the device may be found in the catalog by the alarm process 91 and transferred to the Fieldbus process 90. The Fieldbus process 90 may then communicate with the newly configured device 38 to retrieve any current alert information (block 158), including alert information associated with the aforementioned device configuration information retrieved from the catalog. The alert information may then be transferred to the alarm process 91 by the Fieldbus process 90 and stored in the alarm data manager 144 (block 160). The alert information may then be subsequently distributed to the alarm server 70 and to any redundant controllers 26 (block 162). In this manner, alert information from the newly commissioned field device 38 may be retrieved and distributed.

Technical effects of the invention include the harvesting of alert information from field devices suitable for use in a variety of alert clients, including alert clients communicating in a variety of protocols. For example, the technical effects include receiving and translating alert information from a first protocol (e.g., Fieldbus protocol) into a second protocol (e.g., SDI). Further technical effects include the automatic incorporation and distribution of alert information for field devices once the field devices are physically attached to the industrial automation system. Such a "plug and play" approach enables alert information to be gathered from field devices and provided to controllers and to alert clients once the field device is physically attached to the industrial automation system while minimizing human involvement.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An industrial process control system (10) comprising:
a controller (26, 27) coupled to a field device (38, 40, 42, 44); and
an alert server (70) coupled to the controller (26, 27),
wherein the controller (26, 27) is configured to receive alert information from the field device (38, 40, 42, 44) in a first protocol and communicate the alert information to the alert server (70) in a second protocol.

2. The system (10) of claim 1, wherein the alert information comprises an event, an alarm, or a combination thereof.

3. The system (10) of claim 2, wherein the alarm comprises a low limit alarm (LO), a high limit alarm (HI), a critical low limit alarm (LO LO), a critical high limit alarm (HI HI), a deviation low alarm (DV LO), a deviation high alarm (DV HI), a discrete alarm (DISC), a block alarm (BLOCK), a write protect changed alarm (WRITE), or a combination thereof.

4. The system (10) of claim 2 or claim 3, wherein the alert information comprises the event, and the event comprises a static data update event, a link associated with function block update event, a trend associated with block update event, an ignore bit string update event (IGNORE), an integrator reset update event (RESET), or a combination thereof.

5. The system (10) of any one of claims 1 to 4, wherein the first protocol comprises a Fieldbus Foundation protocol, a HART protocol, or a combination thereof.

6. The system (10) of any one of claims 1 to 5, wherein the second protocol comprises a serial data interface (SDI) protocol, a transmission control protocol/internet protocol (TCP/IP), a user datagram protocol (UDP), a hypertext transfer protocol (HTTP), an institute of electrical and electronics engineers (IEEE) 802.11 protocol, a Zigbee protocol, Z-Wave protocol, or a combination thereof.

7. The system of any one of claims 1 to 6, wherein the field device (38, 40, 42, 44) comprises a Fieldbus Foundation device, a Profibus device, a HART device, or a combination thereof.

8. The system of any one of claims 1 to 7, wherein the controller (26, 27) is configured to collect the alert information from the field device (38, 40, 42, 44) during introduction of the field device (38, 40, 42, 44) into the industrial process control system (10).

9. The system of claim 8, comprising the field device (38, 40, 42, 44), wherein the field device (38, 40, 42, 44) comprises an automatically commissioned field device (38, 40, 42, 44), or a manually commissioned field device (38, 40, 42, 44).

10. The system of any one of claims 1 to 9, comprising a linking device (46, 48), a high speed Ethernet network (50), and a Foundation H1 network (51), wherein the linking device (38, 40, 42, 44) is configured to link the high speed Ethernet network (50) to the Foundation H1 network (51), the controller (26, 27) is coupled to the high speed Ethernet network (50) and the field device (38, 40, 42, 44) is coupled to the Foundation H1 network (51).

11. A method, comprising:
collecting, via a controller (26, 27) of an industrial control system (10), alerts from a field device in a first protocol;
transferring, via the controller of the industrial control system, the alerts to an alert server (70) in a second protocol; and
providing the alerts to one or more components of the industrial control system (10), wherein the first protocol is different from the second protocol.

12. The method of claim 11, wherein the first protocol comprises a Fieldbus Foundation protocol, a Profibus protocol, a HART protocol, or a combination thereof.

13. The method of claim 11 or claim 12 wherein the second protocol comprises a serial data interface (SDI) protocol, a transmission control protocol/internet protocol (TCP/IP), a user datagram protocol (UDP), hypertext transfer protocol (HTTP), an institute of electrical and electronics engineers (IEEE) 802.11 protocol , a Zigbee protocol, a Z-Wave protocol, or a combination thereof.

14. The method of claim 11, 12 or 13, wherein the collecting the alerts comprises receiving an attachment message from the field device (38, 40, 42, 44), and preferably comprises reporting the attachment message to the alert server (70), retrieving a pre-configuration information for the device, and retrieving the alert information by using the first protocol.

15. A non-transitory tangible computer-readable medium comprising executable code, the executable code comprising instructions for performing the method of any one of claims 11 to 14.
